# FASCICULE DE BREVET EUROPEEN

(11) **EP 0 950 697 B1**
(45) Date de publication et mention de la délivrance du brevet: **07.04.2004**
(21) Numéro de dépôt: 99400909.0
(22) Date de dépôt: 14.04.1999
(51) Int. Cl.: C09D 17/00, D21H 19/46

(54) **Dispersion aqueuse de pigment (s) et/ou charge (s) contenant une composition saccharidique particulière**
Eine besondere saccharidische Zusammensetzung enthaltende wässerige Dispersion von Pigmenten und/oder Füllstoffen
Aqueus dispersion of pigment(s) and/or filler(s) comprising a peculiar saccharidic composition

(30) Priorité: 17.04.1998 FR 9804837
(43) Date de publication de la demande: 20.10.1999
(73) Titulaire: Roquette Frères, 62136 Lestrem (FR)
(72) Inventeur: Lefer, Pierre, 59660 Merville (FR); Gosset, Serge, 62136 Lestrem (FR); Baudelle, Renaud, 59660 Merville (FR); Merle du Bourg, Régis, 59110 La Madeleine (FR)
(74) Mandataire: Boulinguiez, Didier

(56) Documents cités:
- EP-A- 0 542 052
- EP-A- 0 571 190

## Description

La présente invention concerne une nouvelle dispersion aqueuse de pigment(s) et/ou charge(s) contenant, en tant qu'adjuvant, une quantité particulière d'une composition saccharidique particulière à base de monosaccharide(s) et/ou disaccharide(s) hydrogénés. Elle vise également un procédé de préparation particulier ainsi que certaines utilisations de ladite dispersion.

Par "pigments", on entend généralement des substances organiques ou minérales, naturelles ou synthétiques, se présentant sous la forme de petites particules pratiquement insolubles dans leur milieu d'application et qui sont utilisées pour leurs propriétés colorantes, protectrices et/ou magnétiques. Pour leur part, les "charges" ou "fillers" sont généralement employées, en premier lieu, comme matières de remplissage permettant, à moindre coût., de préserver les propriétés applicatives essentielles de leur milieu d'application, voire d'améliorer certaines de ces propriétés.

Ces notions ne sont aucunement exclusives l'une de l'autre puisque de nombreuses substances sont qualifiables à la fois de "pigments" et de "charges" en fonction des domaines et conditions d'application envisagés. C'est le cas, par exemple, des argiles (kaolins, smectites et autres), des carbonates de calcium (précipités ou naturels), du talc, du dioxyde de titane, des sulfates ou sulfo-aluminates de calcium ou de baryum.

De nombreux domaines d'application utilisent largement les pigments et charges et notamment les industries du papier, des peintures et vernis, des encres, des adhésifs, des détergents, des matières textiles et cuirs, des matières plastiques et caoutchoucs, des films, des céramiques et émaux, des matériaux de construction et des matières cosmétiques.

Dans certaines industries, certains pigments ou charges sont également appelées "extenders", "extender pigments", "pigment fillers" ou "pigment coatings", ces qualifications étant ici incluses dans la notion globalisée de "pigments et/ou charges".

Les pigments et charges présentent une très grande diversité tant en termes d'origine et de nature que de propriétés physico-chimiques et applicatives comme il résulte, entre autres, de l'ouvrage intitulé "ULLMANN'S ENCYLOPEDIA OF INDUSTRIAL CHEMISTRY" - Fifth Edition - VCH, en particulier des passages suivants dudit ouvrage :
- Volume A7 (1986) : "Clays", pages 109 à 136,
- Volume A18 (1991) : "Paints and Coatings", en particulier les pages 365, 437, 446 et 455 à 465,
- Volume A18 (1991) : "Paper and Pulp", en particulier les pages 611 à 614 et 647 à 658,
- Volume A20 (1992) "plastics, Additives", en particulier les pages 495 à 500,
- Volume A20 (1992) : "Pigments, Inorganic", pages 245, 250 à 257 et 266 à 271, et "Pigments, organic", pages 371 à 377,
- Volume A22 (1993) : "Printing Inks", en particulier les pages 154 à 156 et
- Volume A23 (1993) : "Rubber, 4. Chemicals and Additives", en particulier les pages 391 à 399.

En ce qui concerne plus spécifiquement les applications papetières, on peut se reporter à l'ouvrage "Pigments for paper", 1997, TAPPI PRESS, pages 1 à 20. Pour les applications dans les peintures, référence peut être faite à l'ouvrage "Peintures en phase aqueuse" - chapitre 9 "pigments et matières de charge", 1997,GALVANO ORGANO.

Dans un certain nombre d'utilisations il est, sinon obligatoire, tout au moins avantageux de pouvoir disposer de pigments et/ou charges sous la forme de dispersions aqueuses, communément appelées "slurries", présentant des matières sèches ("M.S.") variables, généralement supérieures à 20-25%, par exemple de l'ordre de 35 à 70% pour celles destinées au couchage du papier.

Les avantages et inconvénients respectifs des slurries et des formes sèches de pigments sont repris en page 72 de l'ouvrage précité "Pigments for paper". En regard des formes sèches, les dispersions aqueuses permettent généralement d'améliorer les opérations industrielles de dosage, transport et mélange. Elles permettent également aux utilisateurs un gain de temps appréciable, notamment lorsqu'elles se présentent sous la forme de produits prêts à l'emploi.

Ces slurries constituent également l'un des moyens permettant d'apporter tout ou partie de l'eau obligatoirement nécessaire à la constitution, à la réactivité et à l'évolution souhaitées du milieu d'application dans lequel pigment(s) et/ou charge (s) sont introduits (par exemple une sauce de couchage du papier), même si ultérieurement ladite eau est éliminée de manière plus ou moins complète au niveau du produit fini (par exemple papier couché séché).

La préparation, le stockage, la manipulation et l'utilisation de dispersions de pigments ou charges posent cependant des problèmes techniques et économiques. En premier lieu, l'obtention puis la conservation de dispersions homogènes et stables nécessitent la mise en oeuvre de moyens mécaniques (agitateurs industriels) et chimiques (agents dispersants, biocides) qui augmentent le prix de revient de ces compositions. Or, industriellement, ces moyens sont obligatoires sauf à risquer d'altérer significativement les propriétés, notamment optiques, du produit fini (papier, peinture, etc...).

Les agents dispersants communément employés sont de nature polyanionique tels que les sels d'acides polyphosphoriques ou polyacryliques. Cependant, les polyphosphates sont susceptibles de précipiter, et donc de devenir inefficaces, en quelques jours, notamment lorsque le stockage de la dispersion se fait à température relativement élevée ou à pH fortement alcalin. En outre, le taux d'introduction optimal d'un dispersant dans un slurry est difficile à déterminer de manière rapide et fiable. En particulier, le surdosage d'un agent dispersant peut résulter en l'augmentation indésirable de la viscosité d'un slurry. De plus, dans certaines applications, le dispersant contenu dans un slurry de viscosité acceptable peut augmenter défavorablement la viscosité du milieu d'application final, par exemple une composition de couchage du papier à base d'agents liants anioniques.

La dispersibilité et l'aptitude au broyage d'un pigment comme le dioxyde de titane peuvent être améliorées ou contrôlées par surfaçage avec de nombreux composés minéraux ou organiques, hydrophiles ou hydrophobes, comme décrit dans les ouvrages précités "Pigments for paper" (pages 163 - 165) et "ULMANN'S ENCYCLOPEDIA CHEMISTRY" (pages 279, 282 - Vol. A20). Parmi ces composés sont cités les polymères d'alcools, les amines et les acides organiques qui sont connus par ailleurs comme agents de mouture du ciment. Le brevet FR 2.146.484 divulgue également la possibilité de disperser directement du dioxyde de titane filtré / déshydraté avec des agents tels que des polyols (2-amino-2 éthyl 1-propanol, sorbitol, mannitol), de la triéthanolamine ou des polycarboxylates, en vue de son utilisation dans les peintures. Il résulte cependant de la lecture de ce brevet que a) pour être efficaces ces agents doivent être introduits dans des proportions très précises , i.e entre 0,3 et 0,75% en poids de pigment sec, et b) ces agents n'empêchent aucunement que les dispersions de dioxyde de titane obtenues n'évoluent défavorablement au stockage, la viscosité desdites dispersions augmentant de 29% à 227% en une semaine, comme il résulte des données du tableau I de ce brevet.

Un autre inconvénient des dispersions aqueuses de pigment(s) et/ou charge(s) réside dans le surcoût énergétique lié au transport puis à l'élimination de l'eau qu'elles contiennent. Il est donc généralement recherché de pouvoir en augmenter la matière sèche (MS). Par ailleurs, des slurries de hautes MS sont souhaités pour augmenter la productivité de certaines installations industrielles comme les coucheuses de papier.

Cependant, l'augmentation de la concentration d'un slurry est souvent limitée voire impossible du fait des phénomènes induits d'augmentation de la viscosité et/ou de l'aptitude à la dilatance, phénomènes pouvant jouer très défavorablement sur les caractéristiques rhéologiques, en particulier la pompabilité, du slurry.

De plus, beaucoup de pigments présentent une forte propension à sécher sur les parois des cuves de stockage des slurries et à y former des dépôts indésirables, notamment propices à la prolifération microbienne. Une telle prolifération peut limiter très fortement les possibilités d'utilisation des pigments mais également des produits finis les contenant, comme décrit dans l'article intitulé "Microbiological Control of Pigments and Fillers in Paper Industry" publié dans "The fondamentals of Papermaking material", Volume 2, pp 955 - 993, C.F. BAKER.

Il résulte de ce qui précéde qu'il existait un besoin de disposer de dispersions aqueuses de pigment(s) et/ou charge(s) qui présentent simultanément :
- une bonne stabilité rhéologique au stockage,
- une bonne stabilité microbiologique au stockage,
- une faible aptitude à former des dépôts dans les enceintes de préparation / stockage, transport, notamment après stockage,
- une faible aptitude à la dilatance et une bonne pompabilité, notamment après stockage, et ce, tout en étant susceptibles de présenter, si besoin, des MS élevées, y compris supérieures à celles utilisées dans la pratique industrielle actuelle.

Et la Société Demanderesse a trouvé, après de nombreuses recherches, qu'un tel résultat pouvait être obtenu dès lors que les dispersions en question vérifiaient un certain nombre de caractéristiques dans leurs composition et rhéologie, lesdites caractéristiques étant liées à la mise en oeuvre, en tant qu'adjuvant, de compositions saccharidiques particulières.

De manière plus précise, la présente invention a pour objet une dispersion aqueuse de pigment(s) et/ou charge (s) caractérisée en ce qu'elle a) comprend une composition saccharidique contenant au moins 30% en poids d'un saccharide choisi parmi les monosaccharides hydrogénés, les disaccharides hydrogénés et les mélanges quelconques d'au moins deux quelconques de ces produits, ce pourcentage étant exprimé en poids sec par rapport au poids sec de l'ensemble des saccharides (mono-, di-, tri-, oligo et polysaccharides) hydrogénés, contenu dans ladite composition, ladite composition aqueuse étant telle qu'elle contient de 0,2 à 5% de composition saccharidique, ces pourcentages étant exprimés en poids sec de composition saccharidique par rapport au poids sec de pigment(s) et charge(s) contenu(s) dans la dispersion, b) présente une viscosité Brookfield mesurée à 20°C et à 20 tours/minute, comprise entre 100 et 4000 mPa.s, de préférence comprise entre 200 et 3000 mPa.s, et c) un indice d'instabilité de viscosité, mesuré selon le test A décrit ci-dessous, inférieur à 35 %, de préférence à 32 %.

Ce test A permet d'évaluer la stabilité rhéologique au stockage de la dispersion. Il consiste à mesurer, à un moment donné et notamment dès après sa préparation, la viscosité Brookfield d'une dispersion et ce, à 20°C et à 20 tours/minute puis à la remesurer, dans les mêmes conditions, 7 jours plus tard, après stockage dans des pots de verre de 300ml hermétiquement fermés, conservés à 20-22°C environ et dont le contenu est agité manuellement juste avant toute mesure de viscosité.

L'indice de stabilité, exprimé en %, est donné par la formule (BVf-BVi) / BVi, où BVi = viscosité initiale de la dispersion et BVf = viscosité de la même dispersion, mesurée 7 jours après la mesure de BVi.

Selon une première variante, la composition saccharidique contenue dans la dispersion de pigment(s) et/ou charge(s) selon l'invention comprend au moins 60%, de préférence au moins 70% et en particulier au moins 75%, en poids d'un saccharide hydrogéné choisi parmi le sorbitol, le mannitol, le xylitol, l'arabitol, l'iditol, l'érythritol, le maltitol, le lactitol, le glucosido-1-6 mannitol, l'isomaltitol, le cellobiitol et les mélanges quelconques d'au moins deux quelconques de ces produits, ces pourcentages étant exprimés comme précisé ci-avant.

Il a déjà été décrit, dans le brevet EP 106.763 au nom de la Demanderesse, l'utilisation de tels saccharides hydrogénés pour fluidifier à un certain niveau (environ 4,2 à 8,8 Pa.s) des sauces de couchage de viscosités initiales très élevées (13,5 Pa.s, par exemple) dont le système liant associe amidon non dépolymérisé et latex. Cependant, ce document ne s'intéresse aucunement aux slurries de pigment(s) à proprement parler, a fortiori aux effets éventuels que pourrait procurer tel ou tel saccharide hydrogéné au niveau des caractéristiques de stabilité au stockage de ces slurries, notamment en termes de rhéologie, de contamination microbienne ou de formation de dépôts sur les parois des enceintes de stockage. Ceci, d'autant que ce brevet démontre l'intérêt d'introduire tout sucre hydrogéné au niveau de l'étape finale de préparation d'une sauce de couchage, i.e dans un milieu hautement viscosifié où les pigments sont déjà mis en présence intime de l'amidon et du latex, milieu qui est utilisé quasi-extemporanément pour le traitement du papier.

Plus récemment, le brevet US 5.618.342 a préconisé l'utilisation de polyols tels que glycérol, sorbitol, polyéthylène / polypropylène glycols, et polyvinylpirrolidone, comme agents humectants de préparations à très hautes MS (90% environ selon les exemples) à base de pigments très particuliers, i.e des silicates écailleux surfacés par des oxydes métalliques. Ce brevet, lequel n'exemplifie que le glycérol comme humectant, souligne cependant l'obligation de mettre en oeuvre un agent conservateur (sorbate de potassium, ester de PHB) pour que ces préparations de pigments soient véritablement redispersables et donc utilisables industriellement.

Or, de façon surprenante et inattendue, la Société Demanderesse a non seulement trouvé que, dans le but recherché par la présente invention, des mono- ou disaccharides hydrogénés étaient plus performants que le glycérol mais également que la substitution, à un degré significatif, d'un monosaccharide hydrogéné par un disaccharide hydrogéné n'altérait que peu, voire améliorait (en le diminuant) l'indice d'instabilité de viscosité du slurry ainsi adjuvanté. Or, il était logique de penser que l'augmentation du poids moléculaire d'un adjuvant augmente tant la viscosité intrinsèque que l'instabilité au stockage d'un slurry.

En suite de quoi, selon une variante de la dispersion selon l'invention, cette dernière comprend une composition saccharidique qui contient :
- de 0,5 à 100%, de préférence de 5 à 100% et notamment de 10 à 90%, en poids de maltitol, et
- de 0 à 99,5%, de préférence de 0 à 95% et notamment de 10 à 90%, en poids de sorbitol et/ou de mannitol.

De manière générale, la composition saccharidique peut être utilisée sous forme liquide, pâteuse ou solide en vue de la préparation de la dispersion selon l'invention. Elle peut notamment être utilisée sous forme de sirops de MS quelconques, par exemple de 20 à 80% de MS. En fonction de l'eau qu'elle contient, la composition saccharidique peut, ou non, apporter directement toute l'eau nécessaire à la préparation de la dispersion.

Cette préparation peut donc se faire par mélange de la composition saccharidique et des pigments et/ou charges, en présence ou non d'eau "exogène", i.e d'eau non apportée par ladite composition. De préférence, cette préparation se fait en présence, entre autres, d'agents dispersants anioniques tels que ceux précités ou, par exemple, de saccharides non hydrogénés ou hydrogénés tels que l'hydrolysat d'amidon POLYSORB^{R} 70/12/12 et oxydés, par exemple selon l'un des procédés décrits dans les brevets EP 780.399, EP 798.310 ou WO 97/20860.

Les pigments et charges utilisables selon l'invention incluent les produits cités précédemment et ceux décrits dans au moins l'un des documents de l'art antérieur référencés ci-avant.

Selon une variante de la dispersion aqueuse de pigment(s) et/ou charge(s) selon l'invention, celle-ci contient de 0,5 à 4% , et notamment de 1 à 3% de composition saccharidique telle que décrite, ces pourcentages étant exprimés en poids sec de composition saccharidique par rapport au poids sec de pigment(s) et charge(s) contenu dans ladite dispersion.

Des taux d'introduction de 1,3 à 2,5% environ sont particulièrement avantageux.

La MS des slurries n'est pas un paramètre limitatif de l'invention. D'une manière générale, cette MS est supérieure à 50% et inférieure à 90%.

La Société Demanderesse a trouvé que des dispersions aqueuses de pigment(s) et/ou charge(s) particulièrement avantageuses présentent a) une MS comprise entre 55 et 88%, de préférence entre 65 et 85% et b) un indice d'instabilité de viscosité, mesuré comme décrit ci-avant, inférieur à 30%.

Cependant, pour certaines applications telles que les applications de papeterie de masse, la MS des slurries peut être inférieure à 35 % et par exemple être comprise entre 20 et 30 % environ.

En outre, le pH des slurries peut se situer dans une large gamme de pH, par exemple entre 5,0 et 11,0 environ et notamment entre 6,5 et 10,5 environ.

En vue de leur application, en particulier, dans le couchage du papier, ces dispersions peuvent notamment présenter a) une MS comprise entre 72 et 80%, b) une viscosité Brookfield (20°C, 20 t/mn) comprise entre 200 et 1500 mPa.s et c) un pH compris entre 6,5 et 10,5 environ, notamment entre 8,0 et 10,0 environ.

Comme exemplifié par ailleurs, ces dispersions peuvent en outre être caractérisées par le fait qu'elles contiennent également un polyol non saccharidique, en particulier du glycérol, celui-ci ayant été apporté simultanément ou non à la composition saccharidique.

Par ailleurs et comme également exemplifié ci-après, la Demanderesse a trouvé qu'il pouvait être particulièrement d'intérêt de préparer la dispersion aqueuse selon l'invention en introduisant les pigments à un stade final ou tout au moins à un milieu contenant déjà la composition saccharidique, notamment à base de saccharides hydrogénés. De manière surprenante, cette façon de faire permet d'augmenter encore l'efficacité de ladite composition.

La présente invention a donc également pour objet un procédé de préparation d'une dispersion aqueuse de pigment(s) et/ou charge(s) caractérisé en ce qu'il comprend une étape au cours de laquelle tout ou partie de la quantité de pigment(s) et/ou charge(s) est introduite au sein d'un milieu constitué, en tout ou partie, d'une composition saccharidique telle que décrite ci-avant.

Les dispersions selon l'invention constituent de nouveaux produits qui, de par leurs caractéristiques rhéologiques et de stabilité sont avantageusement applicables dans les industries du papier, des peintures et vernis, des encres, des adhésifs, des matières textiles et autres industries citées précédemment.

Le concept général de la présente invention repose également sur l'utilisation d'une composition saccharidique telle que décrite pour améliorer la stabilité au stockage, en particulier la stabilité rhéologique, et/ou le caractère autonettoyant d'une dispersion aqueuse de pigment(s) et/ou de charge(s).

La présente invention va être décrite de façon encore plus détaillée à l'aide des exemples qui suivent et qui ne sont aucunement limitatifs.

### EXEMPLE 1

On prépare des dispersions de kaolin de type "KAOFINE 90" dans une enceinte en acier inoxydable d'une capacité de 2 litres, équipée d'un moteur muni d'une turbine défloculeuse de 65mm de diamètre et tournant à 1400 tours/minute. Chaque dispersion se fait par mise en oeuvre successive, dans de l'eau, des produits suivants :
- 0,1% de dispersant "POLYSEL S" (en poids sec/poids sec de pigment),
- soude à 100 g/l en quantité suffisante pour que le milieu final présente un pH d'environ 8,5 à 9,0,
- 1,5%, en poids sec/poids sec de pigment, de l'une ou l'autre des compositions saccharidiques A à G décrites ci-après, et
- de "KAOFINE 90" en quantité suffisante pour que la matière sèche (MS) des dispersions soit de 72%.

Les compositions saccharidiques A à D utilisées conformément à l'invention et F et G non conformes à l'invention, consistent respectivement en :
A = mélange* contenant environ 98,5% (sec/sec) de sorbitol, 0,6% (sec/sec) de mannitol et 0,2% (sec/sec) de maltitol,
B = mélange* contenant environ 71,5% de sorbitol, 1% de mannitol et 13% de maltitol,
C = mélange* contenant environ 2% de sorbitol, 0,5% de mannitol et 74% de maltitol,
D = maltitol poudre,
F = mélange* contenant environ 10% de sorbitol, 10,5% de mannitol et 5% de maltitol,
G = mélange* contenant environ 1% de sorbitol et 6% de maltitol.

* La matière sèche (M.S.) de ces mélanges est constituée en outre de tri-, oligo- et/ou polysaccharides hydrogénés. La MS de ces mélanges se situe entre 70 et 80%.

Les compositions obtenues sont dispersées pendant 30 minutes à l'aide de la turbine défloculeuse précitée.

Au temps Ti, i.e dès après turbinage, on mesure la viscosité Brookfield (VBi en mPa.s), à 20°C et 20t/mn, de chaque dispersion ainsi que d'une dispersion témoin T ne contenant aucune composition saccharidique. On regarde également à l'aide d'un viscosimètre à haut cisaillement de type "HERCULES DV-10" équipé d'une broche A, le seuil de dilatance SDi, i.e la vitesse maximale (200, 300, 400 ou 500 t/mn) pour laquelle la dispersion ne présente pas de phénomène de dilatance. On mesure la viscosité HERCULES (VHi en mPa.s) de la dispersion à cette vitesse. Au temps Tf, i.e 7 jours après Ti, on re-mesure la viscosité Brookfield (VBf), le seuil de dilatance (SDf) et la viscosité HERCULES au seuil de dilatance (VHf) de chacune des dispersions. A partir des valeurs VBi et VBf, on calcule l'indice d'instabilité de viscosité (INST en %) comme indiqué précédemment.

Les résultats obtenus sont repris ci-après :

| DISPERSION | T | A | B | C | D | F | G |
|---|---|---|---|---|---|---|---|
| VBi(mPa.s) | 1500 | 1250 | 1250 | 1300 | 1300 | 1250 | 1650 |
| SDi(t/mn) | 500 | 500 | 500 | 400 | 400 | 400 | 400 |
| VHi (mPa.s) | 46,2 | 41,6 | 42,4 | 43,9 | 45,3 | 44,7 | 56,3 |
| VBf (mPa.s) | 1950 | 1600 | 1450 | 1700 | 1700 | 1700 | 2250 |
| SDf (t/mn) | 200 | 300 | 300 | 300 | 300 | 200 | 200 |
| VHf (mPa.s) | 74,9 | 67,5 | 57,3 | 78,3 | 78,9 | 84 | 108 |
| INST (%) | 30 | 28 | 24 | 30 | 30 | 36 | 36 |

Il ressort de ces résultats que les dispersions contenant les compositions saccharidiques A à D présentent à la fois une stabilité de viscosité améliorée et une aptitude à la dilatance après stockage diminuée, en regard de la dispersion témoin T. Par contre, les dispersions contenant les compositions F et G, non conformes à l'invention, présentent une stabilité de viscosité inférieure à celle de la dispersion T et une aptitude à la dilatance après stockage au moins aussi développée. Ces résultats montrent l'intérêt, qui ne pouvait être soupçonné, d'utiliser des compositions saccharidiques contenant au moins 30% de mono- et/ou disaccharides hydrogénés pour améliorer la stabilité au stockage de dispersions aqueuses de pigments.

De façon surprenante, la présence significative d'un disaccharide (maltitol) dans ces compositions non seulement ne détériore pas significativement cette stabilité au stockage en regard d'une composition constituée essentiellement de monosaccharide (sorbitol - cf composition A) mais de plus est apte à améliorer encore cette stabilité (cf composition B).

D'autres études ont également montré que, après 4 jours de stockage à 20 ou 25°C par exemple, les dispersions de pigment selon l'invention :
- ne présentaient pas une aptitude plus prononcée que la dispersion témoin T à être contaminables par des microorganismes (germes aérobies mésophiles, germes anaérobies, levures et moisissures notamment),
- présentaient une chute de pH non supérieure à celle du témoin et un jaunissement inférieur,
- ne présentaient pas de propension particulière à la décantation ou la séparation de phase,
- laissaient, en regard de la dispersion témoin, beaucoup moins de dépôts sur les parois des enceintes de stockage. La vidange, le nettoyage et le rinçage de ces enceintes sont donc d'autant facilités de par les remarquables propriétés autonettoyantes des dispersions selon l'invention.

Ces éléments constituent des avantages industriels indéniables et d'autant moins prévisibles que les dispersions selon l'invention contiennent, de manière caractéristique, des substances (saccharides) qui, par nature, ne peuvent, a priori, que faciliter la formation de dépôts entartrant propices à favoriser la contamination microbienne et à entraver les opérations de nettoyage.

### EXEMPLE 2

Dans le cadre d'autres essais, les mélanges suivants ont été testés en tant qu'adjuvants de dispersions aqueuses de "KAOFINE 90" à 72% de MS.
- mélange 1 : mélange à 97% de MS à base de 30% de glycérol + 70% d'une composition saccharidique contenant notamment 87% de sorbitol, 8% de mannitol et 3% de maltitol,
- mélange 2 : mélange à 92% de MS à base de 25% de glycérol et 75% d'une composition saccharidique contenant notamment 3% de sorbitol et 54% de maltitol.

Le mélange 2 s'est révélé aussi performant qu'un adjuvant constitué totalement de glycérol. Le mélange 1 s'est révélé conférer une aptitude à la dilatance inférieure à celle du glycérol et équivalente à un adjuvant constitué de la composition B précitée.

### EXEMPLE 3

On a étudié l'effet de l'incorporation de 0,3 à 1,5% de la composition saccharidique B décrite ci-avant dans chacune des dispersions de pigment(s) ci-après :
- dispersion 1 : dispersion à 68% de MS de kaolin délaminé de type "KAOWHITE S",
- dispersion 2 : dispersion à 68% de MS d'argile type "SPS English China Clay",
- dispersion 3 : dispersion à 72% de MS de kaolin "KAOFINE 90",
- dispersion 4 : dispersion à 75% de MS de carbonate de calcium "HYDROCARB HC 90",
- dispersion 5 : dispersion à 75,2% de MS d'un mélange 60/40 de carbonate de calcium ("HYDROCARB HC 90") et de kaolin ("AMAZON 88").

Pour ces essais, la composition saccharidique a été mise en oeuvre dans l'eau après l'agent dispersant ("POLYSEL S") et les pigments, le mélange résultant étant redispersé pendant 5 mn.

Ces essais ont globalement montré l'intérêt de la composition saccharidique B pour diminuer et stabiliser la viscosité de slurries de pigments de caractéristiques très différentes tant en termes de MS, de viscosité que de nature de pigment. Il est notamment apparu qu'une telle composition était particulièrement d'intérêt pour l'obtention, souhaitée dans de nombreuses applications industrielles, de dispersions présentant simultanément une bonne stabilité de viscosité et une haute MS, se situant en particulier entre 72 et 80%. Dans cette perspective, des taux d'introduction en composition B supérieurs ou égaux à 1,3% se sont montrés particulièrement avantageux.

Dans un autre essai, on a réalisé des dispersions telles que les dispersions 1 à 3 précitées mais en introduisant la totalité de la composition saccharidique B avant de mettre en oeuvre les pigments, le mélange résultant étant dispersé pendant 30 minutes. Curieusement, cette façon de faire a permis de diminuer encore la viscosité des slurries ce qui permet d'envisager d'augmenter encore, si besoin, la MS de telles dispensions.

### EXEMPLE 4

Dans cet essai, on a étudié les effets de différentes compositions saccharidiques comme agents de stabilisation de viscosité et/ou agents dispersants d'un slurry de carbonate de calcium ne contenant initialement aucun adjuvant, présentant une MS de 26%, une viscosité Brookfield après préparation de 600 mPa.s et une viscosité après stockage de 24 heures, de 900 mPa.s soit une augmentation de viscosité de 50%.

Il apparaît que la mise en oeuvre de 1% de composition saccharidique B précitée permet, à viscosité initiale à peu près égale (550 mPa.s), non seulement d'augmenter la MS (29,5%) mais également la stabilité au stockage (augmentation de viscosité après 24 H : 18,2% seulement) de la dispersion. Il en est de même d'une composition saccharidique à 70% de MS de sorbitol boraté qui, à viscosité égale (600 mPa.s) permet d'augmenter encore plus significativement la MS (39%) et la stabilité au stockage (augmentation de viscosité : 8,3% seulement) de la dispersion.

En outre, et de manière surprenante, la composition saccharidique F précitée, lorsqu'elle subit un traitement d'oxydation tel que celui décrit dans le brevet WO 97/20860, permet d'augmenter encore la MS (46,8%) et la stabilité au stockage (aucune augmentation de viscosité après 24 heures) de la dispersion. En suite de quoi, un tel saccharide oxydé se comporte comme un véritable agent dispersant, apte à se substituer, en tout ou partie, à un agent dispersant classique comme un polyacrylate.

## Revendications

1. Dispersion aqueuse de pigment(s) et/ou charge(s) **caractérisée en ce qu'**elle :
a) comprend une composition saccharidique contenant au moins 30 % en poids d'un saccharide choisi parmi les monosaccharides hydrogénés, les disaccharides hydrogénés, et les mélanges quelconques d'au moins deux quelconques de ces produits, ce pourcentage étant exprimé en poids sec par rapport au poids sec de l'ensemble des saccharides hydrogénés, contenu dans ladite composition, ladite dispersion aqueuse étant telle qu'elle contient de 0,2 à 5 % de composition saccharidique, ces pourcentages étant exprimés en poids sec de composition saccharidique par rapport au poids sec de pigment(s) et charge(s) contenu dans la dispersion,
b) présente une viscosité Brookfield, mesurée à 20°C et à 20 t/mn, comprise entre 100 et 4 000 mPa.s, de préférence comprise entre 200 et 3 000 mPa.s et
c) présente un indice d'instabilité de viscosité, mesuré selon un test A, inférieur à 35 %, de préférence inférieur à 32 %, ledit test A consistant à mesurer, à un moment donné et notamment dès après sa préparation, la viscosité Brookfield de ladite dispersion à 20°C et à 20 tours/minute puis à la remesurer, dans les mêmes conditions, 7 jours plus tard, après stockage dans des pots de verre de 300 ml hermétiquement fermés, conservés à 20-22°C environ et dont le contenu est agité manuellement juste avant toute mesure de viscosité.

2. Dispersion selon la revendication 1 **caractérisée en ce que** la composition saccharidique contient au moins 60%, de préférence au moins 70 % et encore plus préférentiellement au moins 75 %, en poids d'un saccharide choisi parmi le sorbitol, le mannitol, le xylitol, l'arabitol, l'iditol, l'érythritol, le maltitol, le lactitol, le glucosido-1-6 mannitol, l'isomaltitol, le cellobiitol et les mélanges quelconques d'au moins deux quelconques de ces produits.

3. Dispersion selon la revendication 2 **caractérisée en ce que** la composition saccharidique contient :
- de 0,5 à 100 %, de préférence de 5 à 100 % et encore plus préférentiellement de 10 à 90 % en poids de maltitol et,
- de 0 à 99,5 %, de préférence de 0 à 95 % et encore plus préférentiellement de 10 à 90 % en poids de sorbitol et/ou de mannitol.

4. Dispersion selon l'une quelconque des revendications 1 à 3 **caractérisée en ce qu'**elle contient de 0,5 % à 4 % et de préférence de 1 à 3 %, de composition saccharidique, ces pourcentages étant exprimés en poids sec de composition saccharidique par rapport au poids sec de pigment(s) et charge(s) contenu dans la dispersion.

5. Dispersion selon l'une quelconque des revendications 1 à 4 **caractérisée en ce qu'**elle présente :
a) une matière sèche (MS) comprise entre 55 et 88%, de préférence comprise entre 65 et 85 % et
b) un indice d'instabilité de viscosité inférieur à 30 %.

6. Dispersion selon la revendication 5 **caractérisée en ce qu'**elle présente :
a) une MS comprise entre 72 et 80 %,
b) une viscosité Brookfield, mesurée à 20°C et à 20 t/mn, comprise entre 200 et 1500 mPa.s et
c) un pH compris entre 6,5 et 10,5, de préférence entre 8,0 et 10,0.

7. Dispersion selon l'une des revendications 1 à 6 **caractérisée en ce qu'**elle contient également un polyol non saccharidique, en particulier du glycérol, celui-ci ayant été apporté simultanément ou non à la composition saccharidique.

8. Procédé de préparation d'une dispersion aqueuse de pigment(s) et/ou charge(s) **caractérisé en ce qu'**il comprend une étape au cours de laquelle tout ou partie de la quantité de pigment(s) et/ou charge(s) est introduite au sein d'un milieu constitué, en tout ou partie, d'une composition saccharidique contenant au moins 30 % en poids d'un saccharide choisi parmi les monosaccharides hydrogénés, les disaccharides hydrogénés et les mélanges quelconques d'au moins deux quelconques de ces produits, ce pourcentage étant exprimé en poids sec par rapport à l'ensemble des saccharides hydrogénés contenus dans ladite composition.

9. Utilisation d'une dispersion de pigment(s) et/ou de charge(s) selon l'une des revendications 1 à 7 ou obtenue selon la revendication 8 dans les industries du papier, des peintures et vernis, des encres, des adhésifs, des détergents, des matières textiles et cuirs, des matières plastiques et caoutchoucs, des films, des céramiques et émaux, des matériaux de construction et des matières cosmétiques.

## Patentansprüche

1. Wässrige Dispersion von einem oder mehreren Pigmenten und/oder einem oder mehreren Füllstoffen, **dadurch gekennzeichnet, dass** sie:
a) eine saccharidische Zusammensetzung, enthaltend mindestens 30 Gew.-% eines Saccharids, ausgewählt aus den hydrierten Monosacchariden, den hydrierten Disacchariden und beliebigen Gemischen von mindestens zwei dieser Produkte enthält, wobei dieser Prozentanteil als Trockengewicht bezogen auf das Trockengewicht sämtlicher in der Zusammensetzung enthaltenen hydrierten Saccharide ausgedrückt ist, wobei die wässrige Dispersion derart ist, dass sie 0,2 bis 5 % saccharidische Zusammensetzung enthält, wobei diese Prozentanteile in Trockengewicht der saccharidischen Zusammensetzung bezogen auf das Trockengewicht der in der Dispersion enthaltenen Pigmente und Füllstoffe ausgedrückt sind,
b) eine Brookfield-Viskosität, gemessen bei 20°C und 20 Umdrehungen/Minute zwischen 100 und 4.000 MPa·s, bevorzugt zwischen 200 und 3.000 MPa·s aufweist, und
c) einen nach einem Test A gemessenen Viskositätsinstabilitätsindex von kleiner 35 %, bevorzugt von kleiner 32 % aufweist, wobei der Test A darin besteht, die Brookfield-Viskosität bei 20°C und 20 Umdrehungen/Minute der Dispersion zu einem gegebenen Zeitpunkt und insbesondere nach ihrer Herstellung zu messen, sie danach 7 Tage später unter den gleichen Bedingungen erneut zu messen, nach Lagerung in luftdicht verschlossenen und bei etwa 20-22°C aufbewahrten 300 ml Glasbehältern, und wobei deren Inhalt direkt vor jeder Viskositätsmessung manuell bewegt wird.

2. Dispersion nach Anspruch 1, **dadurch gekennzeichnet, dass** die saccharidische Zusammensetzung mindestens 60 Gew.-%, bevorzugt mindestens 70 Gew.-% und noch stärker bevorzugt mindestens 75 Gew.-% eines Saccharids, ausgewählt aus Sorbit, Mannit, Xylit, Arabit, Idit, Erythrit, Maltit, Lactit, Glucosido-1,6-mannit, Isomaltit, Cellobiit und beliebigen Gemischen von mindestens zwei dieser Produkte enthält.

3. Dispersion nach Anspruch 2, **dadurch gekennzeichnet, dass** die saccharidische Zusammensetzung:
- von 0,5 bis 100 Gew.-%, bevorzugt von 5 bis 100 Gew.-% und noch stärker bevorzugt von 10 bis 90 Gew.-% Maltit, und
- von 0 bis 99,5 Gew.-%, bevorzugt von 0 bis 95 Gew.-% und noch stärker bevorzugt von 10 bis 90 Gew.-% Sorbit und/oder Mannit enthält.

4. Dispersion nach einem der Ansprüche 1 bis 3, **dadurch gekennzeichnet, dass** sie 0,5 % bis 4 % und bevorzugt 1 bis 3 % saccharidische Zusammensetzung enthält, wobei diese Prozentanteile in Trockengewicht der saccharidischen Zusammensetzung bezogen auf das Trockengewicht der in der Dispersion enthaltenen Pigmente und Füllstoffe ausgedrückt sind.

5. Dispersion nach einem der Ansprüche 1 bis 4, **dadurch gekennzeichnet, dass** sie:
a) eine Trockenmasse (TM) zwischen 55 und 88 %, bevorzugt zwischen 65 und 85 %, und
b) einen Viskositätsinstabilitätsindex kleiner 30 % aufweist.

6. Dispersion nach Anspruch 5, **dadurch gekennzeichnet, dass** sie:
a) eine TM zwischen 72 und 80 %,
b) eine Brookfield-Viskosität, gemessen bei 20°C und 20 Umdrehungen/Minute, zwischen 200 und 1.500 MPa•s, und
c) einen pH-Wert zwischen 6,5 und 10,5, bevorzugt zwischen 8,0 und 10,0 aufweist.

7. Dispersion nach einem der Ansprüche 1 bis 6, **dadurch gekennzeichnet, dass** sie auch ein nicht-saccharidisches Polyol, insbesondere Glycerol enthält, wobei dieses gleichzeitig mit der saccharidischen Zusammensetzung eingebracht worden ist oder nicht.

8. Verfahren zur Herstellung einer wässrigen Dispersion von einem oder mehreren Pigmenten und/oder einem oder mehreren Füllstoffen, **dadurch gekennzeichnet, dass** es einen Schritt umfasst, bei dem die Gesamtmenge oder eine Teilmenge der Pigmente und/oder Füllstoffe in ein Medium eingebracht wird, welches insgesamt oder zum Teil gebildet ist aus einer saccharidischen Zusammensetzung, enthaltend mindestens 30 Gew.-% eines Saccharids, ausgewählt aus den hydrierten Monosacchariden, den hydrierten Disacchariden und beliebigen Gemischen von mindestens zwei dieser Produkte, wobei dieser Prozentanteil als Trockengewicht bezogen auf das Trockengewicht sämtlicher in der Zusammensetzung enthaltenen hydrierten Saccharide ausgedrückt ist.

9. Verwendung einer Dispersion von einem oder mehreren Pigmenten und/oder einem oder mehreren Füllstoffen, nach einem der Ansprüche 1 bis 7, oder erhalten nach Anspruch 8, in der Papierindustrie, der Farben- und Lackindustrie, bei Tinten, Klebstoffen, Detergentien, Textil- und Ledermaterialien, Kunststoffen und Kautschuken, Filmen bzw. Folien, Keramiken und Emaillen, Baumateriafien und Kosmetikmaterialien.

## Claims

1. Aqueous dispersion of pigment(s) and/or filler(s) **characterised in that** it:
a) comprises a saccharide composition containing at least 30% by weight of a saccharide chosen from among the hydrogenated monosaccharides, hydrogenated disaccharides, and any mixtures of at least any two of these products, this percentage being expressed in dry weight by comparison with the dry weight of the total amount of the saccharides contained in said composition, said aqueous dispersion being such that it contains from 0.2 to 5% of saccharide composition, these percentages being expressed in dry weight of saccharide composition in comparison with the dry weight of pigment(s) and filler(s) contained in the dispersion
b) presents a Brookfield viscosity, measured at 20°C and at 20 rpm, of between 100 and 4000 mPa.s, preferably between 200 and 3000 mPa.s and
c) presents a viscosity instability index, measured according to a test A, lower than 35%, preferably lower than 32%, said test A consisting in measuring, at a given moment, and particularly from after its preparation, the Brookfield viscosity of a dispersion and this at 20°C and at 20 rpm, then in re-measuring it in the same conditions, seven days later, after it has been stored in hermetically sealed 300 ml glass jars, kept at 20 - 22°C approximately and the contents of which are agitated manually just before any measuring of the viscosity.

2. Dispersion according to claim 1, **characterised in that** the saccharide composition contains at least 60%, preferably at least 70% and even more preferably at least 75%, by weight of a saccharide chosen from among sorbitol, mannitol, xylitol, arabitol, iditol, erythritol, maltitol, lactitol, glycosido-1-6 mannitol, isomaltitol, cellobiitol and any mixtures of at least any two of these products.

3. Dispersion according to claim 2, **characterised in that** the saccharide composition contains:
- from 0.5 to 100%, preferably from 5 to 100% and even more preferably from 10 to 90% by weight maltitol and
- from 0 to 99.5%, preferably from 0 to 95% and even more preferably from 10 to 90% by weight sorbitol and/or mannitol.

4. Dispersion according to any one of claims 1 to 3, **characterised in that** it contains from 0.5% to 4% and preferably from 1 to 3% of saccharide composition, these percentages being expressed in dry weight of saccharide composition in comparison with the dry weight of pigment(s) and filler(s) contained in the dispersion.

5. Dispersion according to any one of claims 1 to 4, **characterised in that** it presents:
a) a solid matter (SM) of between 55 and 88%, preferably between 65 and 85% and
b) a viscosity instability index lower than 30%.

6. Dispersion according to claim 5, **characterised in that** it presents:
a) an SM of between 72 and 80%,
b)a Brookfield viscosity, measured at 20°C and at 20 rpm, of between 200 and 1500 mPa.s and
c) a pH of between 6.5 and 10.5, preferably between 8.0 and 10.0.

7. Dispersion according to any one of claims 1 to 6, **characterised in that** it contains also a non-saccharidic polyol, in particular glycerol, which has been provided at the same time or not as the saccharide composition.

8. Method of preparing an aqueous dispersion of pigment(s) and/or filler(s) **characterised in that** it comprises a stage in the course of which all or part of the quantity of pigment(s) and/or filler(s) is introduced within a medium constituted, in total or in part, by a saccharide composition containing at least 30% by weight of a saccharide chosen from among the hydrogenated monosaccharides, hydrogenated disaccharides and any mixtures of at least any two of these products, this percentage being expressed in dry weight in relation to the total amount of hydrogenated saccharides contained in said composition.

9. Use of a dispersion of pigment (s) and/or filler(s) according to one of claims 1 to 7 or obtained according to claim 8 in the industries manufacturing paper, paints and varnishes, inks, adhesives, detergents, textile materials and leathers, plastics materials and rubbers, films, ceramics and enamels, construction materials and cosmetic materials.
